(19) Europäisches Patentamt

European Patent Office

Office européen des brevets

(11) **EP 1 256 715 A1**

(12) **EUROPÄISCHE PATENTANMELDUNG**

(43) Veröffentlichungstag:
**13.11.2002 Patentblatt 2002/46**

(51) Int Cl.⁷: **F03B 1/02**

(21) Anmeldenummer: 01111517.7

(22) Anmeldetag: **11.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **VA TECH HYDRO GmbH & Co.**
**1140 Wien (AT)**

(72) Erfinder:
• **Geppert, Lothar**
  **8038 Zürich (CH)**
• **Schärer, Christoph**
  **8330 Pfäffikon (CH)**

(74) Vertreter: **VA TECH Patente GmbH & Co**
**Penzinger Strasse 76**
**1141 Wien (AT)**

(54) **Peltonschaufel**

(57)    Peltonschaufeln weisen in der Regel ebene Austrittskanten auf und sind lediglich unter bestimmten Umständen im Bereich der Becherwurzel nach unten abgeschrägt. Diese ebene Form beschränkt natürlich die Optimierungsmöglichkeiten, um die Umlenkung des Strahles in der Peltonschaufel hinsichtlich des Wirkungsgrades der Peltonturbine zu optimieren.
Die vorliegende Erfindung hat sich deshalb die Aufgabe gestellt, die Umlenkung des Strahles durch eine besonders geformte Schaufel zu optimieren und somit den Wirkungsgrad der Peltonturbine zu verbessern.
Die gestellte Aufgabe wird für die Peltonschaufel und das Verfahren zur Herstellung einer Peltunschaufel erfindungsgemäß dadurch gelöst, dass die Austrittskante (6) der Peltonschaufel des Peltonlaufrades zumindest abschnittsweise konkav gekrümmt ist.

Fig. 3

**Beschreibung**

Die Erfindung betrifft eine Peltonschaufel eines Peltonlaufrades, sowie ein Verfahren zur Herstellung einer Peltonschaufel.

Peltonschaufeln wurden bisher mit ebenen Austrittskanten gefertigt. Bevorzugt bei kleinen Strahlkreisverhältnissen, d.h. wenn die Schaufeln auf einen sehr kleinen Strahlkreisdurchmesser zusammenrücken müssen, wurden die Austrittskanten oft lediglich an der Becherwurzel nach unten abgeschrägt, da ansonsten an der Becherwurzel zwischen den Peltonschaufeln zuwenig Platz für das abzufließende Wasser bleibt, wodurch der Umlenkwinkel des Strahles verkleinert wird. Durch die ebenen Austrittskanten verringern sich zwangsweise die Lichtweiten zwischen aufeinanderfolgenden Schaufeln, wodurch weniger Platz für das abfließende Wasser bleibt. Außerdem wird dadurch die für die Umlenkung notwendige Bahnlänge unnötigerweise verlängert. Alle diese Nachteile wirken sich negativ auf den Wirkungsgrad der Peltonturbine aus.

Die vorliegende Erfindung hat sich deshalb die Aufgabe gestellt, die Umlenkung des Strahles durch eine besonders geformte Schaufel zu optimieren und somit den Wirkungsgrad der Peltonturbine zu verbessern.

Die gestellte Aufgabe wird für die Peltonschaufel und das Verfahren zur Herstellung einer Peltonschaufel erfindungsgemäß dadurch gelöst, dass die Austrittskante der Peltonschaufel des Peltonlaufrades zumindest abschnittsweise konkav gekrümmt ist.

Durch diese Form der Austrittskante wird die kinetische Energie des Strahles während der Führung in der Peltonschaufel optimal ausgenutzt und auf das Peltonrad übertragen, womit man eine Verbesserung des Wirkungsgrades der Peltonturbine erzielt. Insgesamt kann dadurch ein Wirkungsgradgewinn von 0.3 bis 0.4 % erzielt werden, was bei gängigen Leistungen von einigen hundert MW bei Peltonturbinen einen beachtlichen Gewinn bedeutet. Diese besondere Form ergibt sich aus einer Optimierung der Umlenkung des Strahles und gewährleistet, dass der Strahl nicht über die für die saubere Umlenkung nötige Bahnlänge hinaus geführt wird. Darüber hinaus kann der Austrittswinkel der Peltonschaufel durch diese Form weiter geschlossen werden, was sich ebenfalls günstig auf den Wirkungsgrad der Peltonturbine auswirkt.

Durch die Absenkung der Austrittskante in Bereich der Bechermitte wird als zusätzlicher Effekt, mehr Platz für das vom vorlaufenden Becher vorbeifließende Wasser geschaffen, es ergibt sich also eine Vergrößerung der Lichtweite. Als direkte Konsequenz daraus, können zur Beibehaltung der optimalen Lichtweiten die Austrittswinkel der Peltonschaufel in diesem Bereich weiter geschlossen werden, was sich wiederum günstig auf den Wirkungsgrad der Peltonturbine auswirkt.

In einer vorteilhaften Ausführung ist die Austrittskante der Peltonschaufel im Bereich der Becherwurzel gegenüber einer ebenen Austrittskante angehoben, wodurch sich die Umlenkwinkel des Strahles vergrößern lassen, was sich nach dem Impulssatz positiv auf den Wirkungsgrad einer Peltonturbine auswirkt. Bei kleinen Strahlkreisverhältnissen $D_1/B_2$, $D_1/B_2 < 3.3$, sollte gleichzeitig mit dem Hochziehen der Austrittskante im Bereich der Becherwurzel der Öffnungswinkel an der Austrittskante in diesem Bereich vergrößert werden, um zu vermeiden, dass der abfließende Strahl zu stark an der nachfolgenden Schaufel streift. Durch die längere Führung des Strahles in der Schaufel ergibt sich insbesondere ein Wirkungsgradgewinn.

Eine weitere vorteilhafte Ausführungsform erhält man, wenn die Austrittskante im Bereich der Schaufelstirn gegenüber einer ebenen Austrittskante angehoben wird, was zusätzlich Spielraum beim Optimieren der Form der Peltonschaufel lässt.

Um möglichst fließende Übergänge der Schaufelform sicherzustellen ist die Austrittskante, bezüglich einer Radialebene des Peltonlaufrades, vorteilhaft zumindest abschnittsweise konvex, gekrümmt. Dadurch kann der Strahl übergehend und ohne unnötige Verluste in der Peltonschaufel umgelenkt werden und aus der Peltonschaufel austreten.

Alternativ dazu, kann eine Vereinfachung in der Herstellung einer erfindungsgemäßen Peltonschaufel erzielt werden, wenn die konkav und/oder konvex gekrümmte Form zumindest abschnittsweise durch einen Polygonzug angenähert wird.

Der Wirkungsgrad der Peltonturbine wird positiv beeinflusst, wenn der Abströmwinkel des Strahles an der Peltonschaufel durch die Form der Austrittskante so eingestellt wird, dass die radiale Komponente der Austrittsgeschwindigkeit des Strahles minimal wird.

Eine zusätzliche Verbesserung des Wirkungsgrades kann erzielt werden, wenn der Abströmwinkel des Strahles an der Peltonschaufel durch die Form der Austrittskante so eingestellt wird, dass die Umlenkung des Strahles zumindest teilweise bezüglich 180° maximiert wird.

Der Wirkungsgrad kann dadurch noch weiter verbessert werden, dass der Abströmwinkel an der Peltonschaufel so eingestellt wird, dass der Strahl beim Austritt aus der Peltonschaufel nur teilweise an der nachfolgenden Peltonschaufel streift.

Gute Optimierungsergebnisse lassen sich erzielen, wenn der Austrittswinkelverlauf zuerst berechnet wird, beispielsweise anhand von numerischen, fluiddynamischen und/oder mathematischen Modellen, und die Feinabstimmung in Modellversuchen durchgeführt wird.

Die Erfindung wird anhand der schematischen, beispielhaften und nicht einschränkenden Figuren 1 bis 4 beschrieben. Die Figuren 1 bis 4 zeigen dabei:

Fig. 1 Die Abströmung des Strahles an einer Peltonschaufel mit ebener Austrittskante.
Fig. 2 Ein Vergleich einer Peltonschaufel mit ebener Austrittskante mit erfindungsgemäßen Peltonschaufeln.

Fig. 3 Die Abströmung des Strahles an einer erfindungsgemäßen Peltonschaufel.

Fig. 4 Eine Draufsicht auf eine erfindungsgemäße Peltonschaufel.

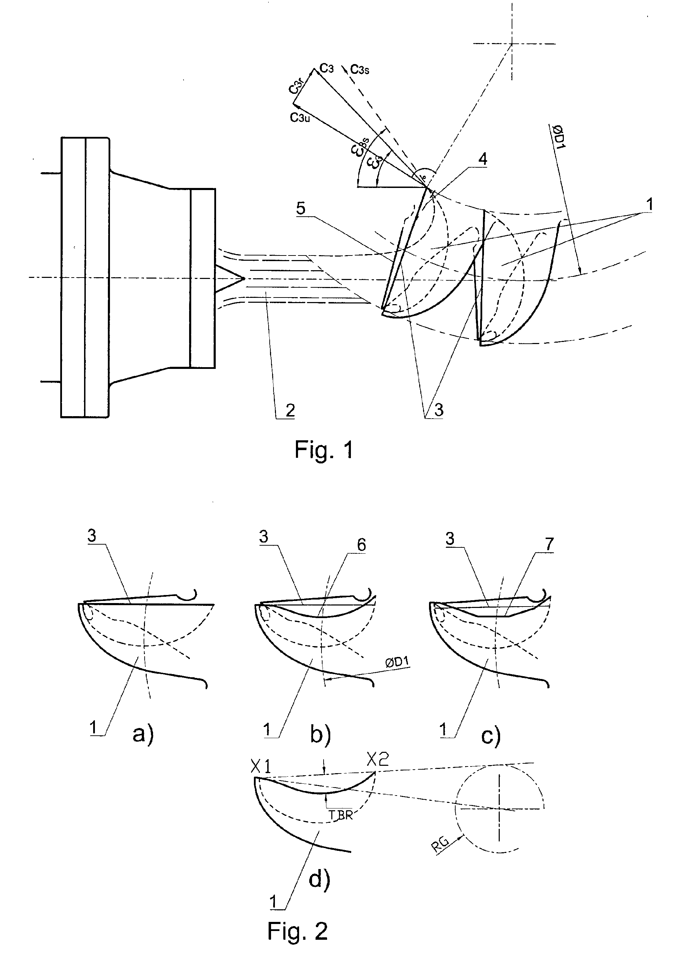

Eine Peltonturbine läuft in einem Gehäuse um eine Drehachse um und wird mit einem Medium, meistens Wasser, aus einer Druckrohrleitung über einen Strahl 2, oder gleichzeitig durch mehrere Strahlen, tangential zu einem mittleren Strahlkreisdurchmesser $D_1$ beaufschlagt. Das sich translatorisch bewegende Medium tritt durch einen Ausschnitt in der Schaufelstirn in die rotierende Peltonschaufel 1 ein, wird an der Schaufelschneide 5 zweigeteilt, in den beiden Bechern der Peltonschaufel 1 umgelenkt und verlässt die Peltonschaufel 1 zu beiden Seiten über den äußeren Schaufelrand, wie in Fig. 1 und Fig. 2 schematisch dargestellt. Nach dem Impulssatz, ergibt sich die Kraft F auf eine stehende Peltonschaufel 1 zu

$$F = (1 + \cos\varepsilon_3)\rho Ac^2.$$

Dabei ist $\varepsilon_3$ der Abströmwinkel in Bezug zur Eintrittsachse des Strahles 2, $\rho$ ist die Dichte des Mediums, $c$ die Strahlgeschwindigkeit und $A$ der Strahlquerschnitt. Wie aus der Beziehung für die Kraft ersichtlich, wird die Kraft maximal, wenn $\varepsilon_3$ gegen Null geht, d.h. wenn das Medium um 180° umgelenkt wird. Da sich das Peltonrad mit den Peltonschaufeln 1 dreht, ergeben sich bei herkömmlichen Peltonrädern, also mit ebener Austrittskante 3, Umlenkwinkeln bezüglich der Eintrittsachse des Strahles 2 zwischen etwa 130° bis phasenweise fast 180°.

Nach der Eulerschen Turbinengleichung,

$$P = \rho Q(u_3 c_{3u} - u_0 c_{0u}),$$

ist die Leistung P einer Peltonturbine dann maximal, wenn das Medium in Umfangsrichtung (Index u) vom Laufrad abströmt, wenn also keine radiale Komponente (Index r) der Strahlgeschwindigkeit $c$ vorhanden ist und gilt

$$c_{3r} = 0 \Rightarrow c_3 = c_{3u}.$$

$\rho$ bezeichnet dabei wieder die Dichte des Mediums, $Q$ den Volumenstrom und $u$ die Umfangsgeschwindigkeit der Schaufel. Der Index 0 bezieht sich auf den Eintritt des Strahles in die Peltonschaufel 1 und der Index 3 auf den Austritt aus der Peltonschaufel 1. Für einen optimalen Betrieb einer Peltonturbine sollten also die Umlenkwinkel während der gesamten Umlenkphase bezüglich 180° maximiert werden und gleichzeitig die Austrittsgeschwindigkeit $c_3$ nur eine Umfangskomponente $c_{3u}$ aufweisen.

In Fig. 1 ist ein Peltonrad mit zwei herkömmlichen Peltonschaufeln 1 angedeutet, das durch einen Strahl 2 beaufschlagt wird. Der Strahl 2 wird an der Schaufelschneide 5 zweigeteilt, wird in den Bechern umgelenkt und tritt mit dem Abströmwinkel $\varepsilon_3$ aus der Peltonschaufel 1 aus. Bei herkömmlichen Peltonschaufeln beträgt der Abströmwinkel $\varepsilon_3$ ungefähr 40° bis 50°. Aufgrund des durch die ebene Austrittskante 3 bedingten Austrittswinkelverlaufes resultiert eine Austrittsgeschwindigkeit $c_3$, die eine radiale Komponente $c_{3r}$ aufweist, mit den aus obigen Ausführungen bekannten Nachteilen. Um zu vermeiden, dass das abfließende Wasser zu stark an der nachfolgenden Peltonschaufel 1 streift, was sich negativ auf die Leistung der Peltonturbine auswirken würde, wird oft im Bereich der Becherwurzel eine abgeschrägt Austrittkante 4 vorgesehen. Dadurch streift das Wasser beim Austreten zwar weniger an der Außenseite der nachfolgenden Peltonschaufel 1, aber die Abströmwinkel $\varepsilon_{3S}$ vergrößern sich jedoch noch mehr und die resultierende Austrittsgeschwindigkeit $c_{3S}$ weist dadurch eine noch größere radiale Komponente auf. Aufgrund der obigen Ausführungen ist es direkt einsichtig, dass sich dadurch der Wirkungsgrad der Peltonturbine verschlechtert.

In Fig. 2, a) ist eine einzelne herkömmliche Peltonschaufel 1 mit einer ebenen Austrittskante 3 dargestellt. Dieser herkömmlichen Peltonschaufel 1, sind in Fig. 2, b) und c) erfindungsgemäße Peltonschaufeln 1 gegenübergestellt, in denen jeweils als Vergleich eine ebene Austrittskante 3 angedeutet ist. In Fig. 2, b) erkennt man, dass die Austrittskante 6 der erfindungsgemäßen Peltonschaufel eine konkave Krümmung aufweist. Unter einer konkaven Krümmung wird hier definitionsgemäß eine Krümmung verstanden, deren Krümmungsmittelpunkt in einer Seitenansicht der Peltonschaufel 1 nach Fig. 2, a) oberhalb der Austrittskante zu liegen kommt. Eine konvexe Austrittskante besitzt folglich einen Krümmungsmittelpunkt unterhalb der Austrittskante 6, also beispielsweise im Peltonschaufelkörper selbst. Die Austrittskante 6 ist weiters im Bereich der Bechermitte, also um den Strahlkreisdurchmesser $D_1$, gegenüber der ebenen Austrittskante 3 abgesenkt und im Bereich der Becherwurzel gegenüber der ebenen Austrittskante 3 angehoben ist, sodass sich im Summe eine verlaufende, konkav gekrümmte Austrittskante 6 ergibt. Insbesondere ergibt sich also bei diesem Ausführungsbeispiel bezüglich einer Radialebene des Peltonlaufrades eine Kontur, die an der Schaufelstirn eine verlaufende, konvex gekrümmte Form aufweist und dann bis zur Becherwurzel in eine verlaufende, konkav gekrümmte Form übergeht. Natürlich sind auch andere Formen denkbar und möglich. Diese Form ergibt sich aus einer Optimierung hinsichtlich der Minimierung der radialen Komponente $c_{3r}$ der Austrittsgeschwindigkeit $c_3$, vorteilhaft $c_{3r} = 0$. Als weiterer Faktor fließt in die Optimierung die Minimierung des Abströmwinkels $\varepsilon_3$,

hinsichtlich eines bezüglich 180° maximalen Umlenkwinkels, und die für die saubere Umlenkung des Strahls 2 in der Peltonschaufel 1 nötige Bahnlänge ein.

Die Optimierung der gekrümmten Austrittskante wird anhand von Rechenmodellen, beispielsweise numerische, fluiddynamische oder mathematische Modelle, durchgeführt und in anschließenden Modellversuchen und/oder Simulationen verifiziert. Natürlich ist es auch möglich die Form nur durch Modellversuche zu optimieren. Dazu haben sich aus der Praxis folgende Wertebereiche als vorteilhaft erwiesen.

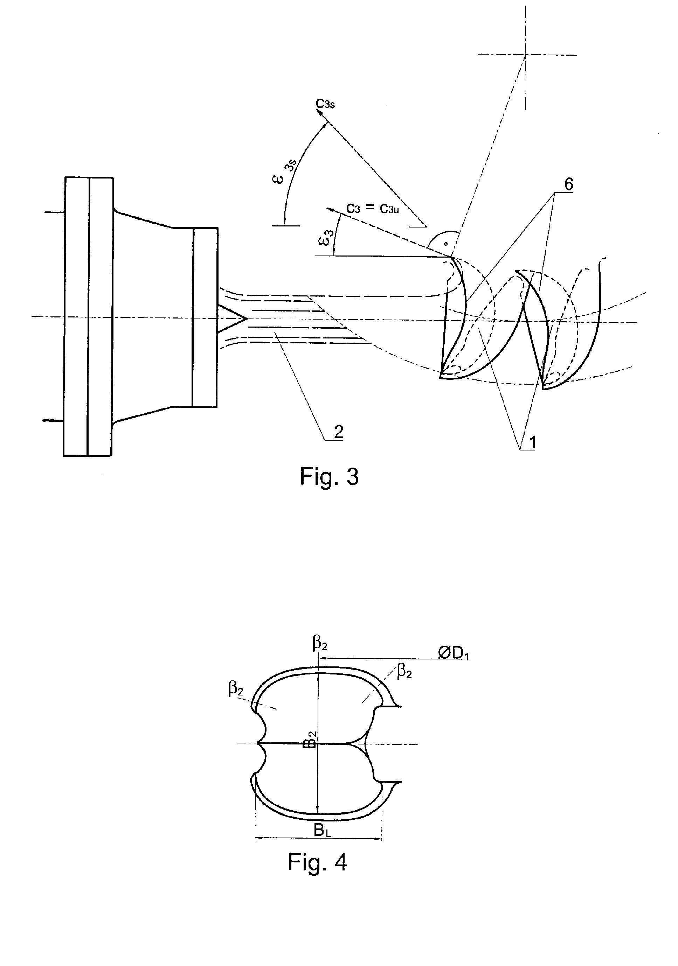

In Fig. 2, d) sind zwei Punkte X1 und X2 gezeigt, die sich aus dem Schnittpunkt der gekrümmten Austrittskante 6 mit der Innenfläche eines Bechers ergeben. Der Grundkreis mit dem Radius $R_G$ um die Peltonradachse ergibt sich dann als der Kreis, der mit der Verlängerung der Linie X1-X2 tangiert. Für Peltonräder soll, wie für Fachmänner bekannt, bei Strahlkreisverhältnissen $D_1$/$B_2 \approx 6$ der Radius $R_G=(0.25$ bis $0.85)B_2$ betragen, bei $D_1$/$B_2 \approx 3$ beträgt der Radius $R_G=(0.55$ bis $1.2)B_2$. Die Tiefe $T_{BR}$ der gekrümmten Austrittskante 6 im Bereich des Strahlkreisdurchmessers $D_1$ sollte dann im Bereich $T_{BR}=(0.03$ bis $0.17)B_2$ liegen. $B_2$ bezeichnet dabei die Breite der Peltonschaufel 1, wie in Fig. 4 dargestellt.

In Fig. 2, c) wurde die gekrümmte Austrittskante durch einen Polygonzug 7 angenähert. Weiters erkennt man, dass zusätzlich noch die Austrittskante 7 im Bereich der Schaufelstirn gegenüber der ebenen Austrittskante 3 angehoben ist. Diese Anhebung ist natürlich auch bei gekrümmten Austrittskanten 6 möglich.

Fig. 3 zeigt ein Peltonrad, welches durch zwei Peltonschaufeln 1 mit konkav gekrümmter Austrittskante 6 angedeutet wird, das durch einen Strahl 2 beaufschlagt wird. Der aus der Umlenkung resultierende Ab-strömwinkel $\varepsilon_3$ ergibt sich in diesem Ausführungsbeispiel dermaßen, dass die radiale Komponente $c_{3r}$ der Austrittsgeschwindigkeit $c_3$ optimalerweise verschwin-det und nur mehr die Umfangskomponente übrigbleibt, sodass gilt $c_3 = c_{3u}$. Als Vergleich ist die Austrittsge-schwindigkeit $c_{3S}$ einer herkömmlichen Peltonschaufel 1 angedeutet, die aufgrund des größeren Austrittswin-kels $\varepsilon_{3S}$ eine radiale Komponente aufweist.

In Fig. 4 ist der Austrittswinkelverlauf über die Peltonschaufellänge $B_L$ an drei Stellen durch den jewei-ligen Austrittswinkel $\beta_2$ angedeutet. Die Austrittswinkel $\beta_2$ werden so eingestellt, dass der umgelenkte Strahl nicht zu stark an der Außenfläche der nachfolgenden Peltonschaufel streift. Dabei existiert für jedes Strahl-kreisverhältniss $D_1/B_2$ ein optimaler Austrittswinkelver-lauf. Dieser Austrittswinkelverlauf kann anhand von nu-merischen, fluiddynamischen und/oder mathemati-schen Modellen berechnet und/oder simuliert werden, oder wird in Modellversuchen ermittelt. Natürlich kann auch eine beliebige Kombination der Verfahren zur Be-stimmung des optimalen Austrittswinkelverlaufes ange-wendet werden.

## Patentansprüche

1. Peltonschaufel eines Peltonlaufrades, **dadurch ge-kennzeichnet, dass** die Austrittkante des Pelton-laufrades zumindest abschnittsweise konkav ge-krümmt ist.

2. Peltonschaufel nach Anspruch 1, **dadurch gekennzeichnet, dass** die Austrittskante der Peltonschaufel im Bereich des mittleren Strahlkreisdurchmessers gegenüber einer ebenen Austrittskante abgesenkt ist.

3. Peltonschaufel nach Anspruch 1 oder 2, **dadurch gekennzeichnet, dass** die Austrittskante der Peltonschaufel im Bereich der Becherwurzel gegenüber einer ebenen Austrittskante angehoben ist.

4. Peltonschaufel nach Anspruch 1, 2 oder 3, **dadurch gekennzeichnet, dass** die Austrittskante der Peltonschaufel im Bereich der Schaufelstirn gegenüber einer ebenen Austrittskante angehoben ist

5. Peltonschaufel nach einem der Ansprüche 1 bis 4, **dadurch gekennzeichnet, dass** die Krümmung der Austrittkante zumindest abschnittsweise konvex gekrümmt ist.

6. Peltonschaufel nach einem der Ansprüche 1 bis 5, **dadurch gekennzeichnet, dass** die konkav und/oder die konvex gekrümmte Form zumindest abschnittsweise durch einen Polygonzug angenähert ist.

7. Peltonschaufel nach einem der Ansprüche 1 bis 6, **dadurch gekennzeichnet, dass** der Abströmwinkel des Strahles an der Peltonschaufel durch die Form der Austrittskante so einstellbar ist, dass die radiale Komponente der Austrittsgeschwindigkeit des Strahles minimiert wird.

8. Peltonschaufel nach einem der Ansprüche 1 bis 7, **dadurch gekennzeichnet, dass** der Abströmwinkel an der Peltonschaufel durch die Form der Austrittskante so einstellbar ist, dass die Umlenkung des Strahles zumindest teilweise bezüglich 180° maximiert wird.

9. Peltonschaufel nach einem der Ansprüche 1 bis 8, **dadurch gekennzeichnet, dass** der optimale Winkelverlauf der Strömung an der Austrittskante anhand von numerischen, fluiddynamischen und/oder mathematischen Modellen berechenbar ist.

10. Peltonschaufel nach einem der Ansprüche 1 bis 9, **dadurch gekennzeichnet, dass** der optimale Winkelverlauf der Strömung an der Austrittskante in Modellversuchen bestimmbar ist.

**11.** Peltonschaufel nach Anspruch 9 oder 10, **dadurch gekennzeichnet, dass** der Winkelverlauf der Strömung an der Austrittskante an der Peltonschaufel so einstellbar ist, dass der Strahl beim Austritt aus der Peltonschaufel zumindest nur teilweise an der nachfolgenden Peltonschaufel streift.

**12.** Verfahren zur Herstellung einer Peltonschaufel, **dadurch gekennzeichnet, dass** die Austrittskante der Peltonschaufel zumindest abschnittsweise konkav gekrümmt ausgeführt wird.

**13.** Verfahren nach Anspruch 12, **dadurch gekennzeichnet, dass** die Austrittskante im Bereich des mittleren Strahlkreisdurchmessers gegenüber einer ebenen Austrittskante abgesenkt wird.

**14.** Verfahren nach Anspruch 12 oder 13, **dadurch gekennzeichnet, dass** die Austrittskante im Bereich der Becherwurzel gegenüber einer ebenen Austrittskante angehoben wird.

**15.** Verfahren nach einem der Ansprüche 12 bis 14, **dadurch gekennzeichnet, dass** die Austrittskante im Bereich der Schaufelstirn gegenüber einer ebenen Austrittskante angehoben wird.

**16.** Verfahren nach einem der Ansprüche 12 bis 15, **dadurch gekennzeichnet, dass** die Austrittskante zumindest abschnittsweise konvex gekrümmt wird.

**17.** Verfahren nach einem der Ansprüche 12 bis 16, **dadurch gekennzeichnet, dass** der optimale Austrittwinkelverlauf anhand von numerischen, fluiddynamischen und/oder mathematischen Modellen berechnet wird.

**18.** Verfahren nach einem der Ansprüche 12 bis 17, **dadurch gekennzeichnet, dass** der optimale Austrittwinkelverlauf in Modellversuchen ermittelt wird.

Fig. 1

Fig. 2

Fig. 3

Fig. 4

**Europäisches Patentamt**

# EUROPÄISCHER RECHERCHENBERICHT

Nummer der Anmeldung

EP 01 11 1517

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 39 38 356 A (EFG TURBINEN UND KRAFTWERKSANL) 20. Dezember 1990 (1990-12-20) * Zusammenfassung * * Spalte 1, Zeile 34 – Spalte 2, Zeile 24; Abbildungen * | 1,12 | F03B1/02 |
| A | PATENT ABSTRACTS OF JAPAN vol. 007, no. 092 (M-208), 16. April 1983 (1983-04-16) & JP 58 015764 A (FUJI DENKI SEIZO KK), 29. Januar 1983 (1983-01-29) * Zusammenfassung * | 1,12 | |

**RECHERCHIERTE SACHGEBIETE (Int.Cl.7)**

F03B

Der vorliegende Recherchenbericht wurde für alle Patentansprüche erstellt

| Recherchenort | Abschlußdatum der Recherche | Prüfer |
|---|---|---|
| DEN HAAG | 5. Oktober 2001 | Criado Jimenez, F |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 11 1517

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-10-2001

| Im Recherchenbericht angeführtes Patentdokument | | Datum der Veröffentlichung | Mitglied(er) der Patentfamilie | | Datum der Veröffentlichung |
|---|---|---|---|---|---|
| DE 3938356 | A | 20-12-1990 | AT | 394092 B | 27-01-1992 |
| | | | AT | 282688 A | 15-07-1991 |
| | | | CH | 685886 A5 | 31-10-1995 |
| | | | DE | 3938356 A1 | 20-12-1990 |
| JP 58015764 | A | 29-01-1983 | KEINE | | |

Für nähere Einzelheiten zu diesem Anhang : siehe Amtsblatt des Europäischen Patentamts, Nr.12/82